(19) **Europäisches Patentamt / European Patent Office / Office européen des brevets**

(11) **EP 2 453 554 A1**

(12) **EUROPEAN PATENT APPLICATION**
published in accordance with Art. 153(4) EPC

(43) Date of publication:
**16.05.2012 Bulletin 2012/20**

(51) Int Cl.:
**H02K 5/04** (2006.01)    **H02K 5/00** (2006.01)

(21) Application number: **09847071.9**

(86) International application number:
**PCT/JP2009/062423**

(22) Date of filing: **08.07.2009**

(87) International publication number:
**WO 2011/004466 (13.01.2011 Gazette 2011/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(72) Inventor: **MINAGAWA, Kazuto**
**Tokyo 100-8310 (JP)**

(74) Representative: **Zech, Stefan Markus et al**
**Meissner, Bolte & Partner GbR**
**Postfach 86 06 24**
**81633 München (DE)**

(71) Applicant: **Mitsubishi Electric Corporation**
**Tokyo 100-8310 (JP)**

(54) **ELECTRIC MOTOR FOR VEHICLE**

(57) A motor for a vehicle is installed in a railway train and has a fan 30 that is mounted on a rotor shaft 10 and that causes the outside air into the motor. The motor for a vehicle includes a stopper 20 that is fixed in between a bearing 50, which supports the rotor shaft 10, and the fan 30, which is inserted from that side of the rotor shaft 10 at which the bearing 50 lies. The stopper 20 is configured to fit with the fan 30. The fan 30 has a linear expansion coefficient set to be greater than linear expansion coefficients of the rotor shaft 10 and the stopper 20. The fan 30 is configured to be fittable with the stopper 20 using bolts that are inserted from outside toward the stopper 20.

## FIG.2

**Description**

Field

The present invention is related to a motor for a vehicle that drives a railroad vehicle, and is particularly related to the configuration of an outer fan.

Background

Generally, when a motor gets heated due to the heat generated during the passage of electric current, the deterioration of an insulator is accelerated and causes a decrease in longevity or efficiency. Hence, it is necessary to cool down the inside of the motor. Particularly in recent years, there has been a development of totally-enclosed-fan-cooled motors that include an outer fan, which is fixed to a rotor shaft at the end lying on the outside of the housing, and an inner fan, which agitates the air inside the motor. Particularly, by taking into consideration the issue of maintenance from outside, it is common practice to fix the outer fan with bolts that are fitted by insertion in the direction of the rotor shaft.
In the conventional technology represented by Patent Literature 1 mentioned below, a fan that is fixed to a rotor shaft in an identical manner as described above rotates so as to let the outside air in and to let the heat out from the inside of the motor. As a result, the motor gets cooled down in an effective manner.

Citation List

Patent Literature

Patent Literature 1: Japanese Patent Application Laid-open No. H05-300698

Summary

Technical Problem

In the conventional technology represented by Patent Literature 1 mentioned above, the fan is bolted to a shaft retainer (stopper) or bolted to the end face of a rotor shaft. However, bolt insert holes formed on the fan have a larger diameter than the diameter of the bolts. For that reason, in case the rotor shaft is subjected to torque variation equal to or greater than the frictional force of the bolting, then the centers of the bolts shift with respect to the bolt insert holes. That sometimes leads to the loosening of the bolts, which eventually causes the bolts to break. In that case, the fan may get unfastened.
The present invention has been made to solve the above problems in the conventional technology and it is an object of the present invention to provide a motor for a vehicle that is configured in such a way that, at normal temperature, the fan can be easily taken out and, at a high temperature or at a low temperature, the fan can be prevented from skidding that may occur due to the torque variation of the rotor shaft.

Solution to Problem

To solve the above problems and achieve an object, a motor for a vehicle according to the present invention installed in a railway train and having a fan that is mounted on a rotor shaft and that causes the outside air into the motor, the motor for a vehicle including: a stopper which functions as a positioning member for the fan in an axial direction, which is fixed in between a bearing supporting the rotor shaft and the fan inserted from one end of the rotor shaft, and which has a surface formed opposite to the fan so as to be fittable with the fan, wherein the fan is fixed by a fastening member, which is inserted toward the stopper in substantially parallel to the rotor shaft, and has a linear expansion coefficient set to be greater than linear expansion coefficients of the rotor shaft and the stopper.

Advantageous Effects of Invention

According to an aspect of the present invention, a fan, which is made from a material having a greater linear expansion coefficient than the linear expansion coefficient of a rotor shaft and a stopper, is made to fit in the stopper. Hence, at normal temperature, the fan can be easily taken out and, at a high temperature or at a low temperature, the fan can be prevented from skidding that may occur due to the torque variation of the rotor shaft.

Brief Description of Drawings

FIG. 1 is a vertical cross-sectional view of a motor with a central focus on a fan.
FIG. 2 is a vertical cross-sectional view explaining a configuration of the motor fan according to a first embodiment.
FIG. 3 is a diagram illustrating a condition in which the motor fan illustrated in FIG. 2 is fixed to a rotor shaft.
FIG. 4 is a cross-sectional view taken along line A-A illustrated in FIG. 3.
FIG. 5 is a diagram explaining a relationship between linear expansion coefficients and the brake torque.
FIG. 6 is a vertical cross-sectional view explaining a configuration of the motor fan according to a second embodiment.

Description of Embodiments

Exemplary embodiments of a motor for a vehicle to the present invention are described below in detail with reference to the accompanying drawings. The present invention is not limited to these exemplary embodiments.

First embodiment

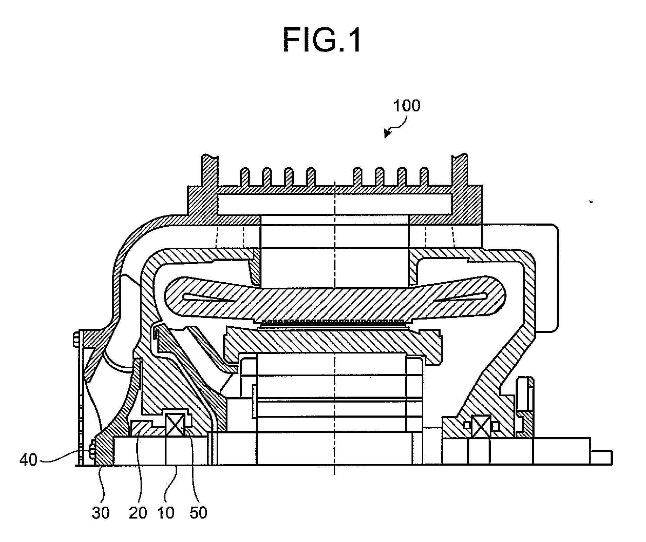

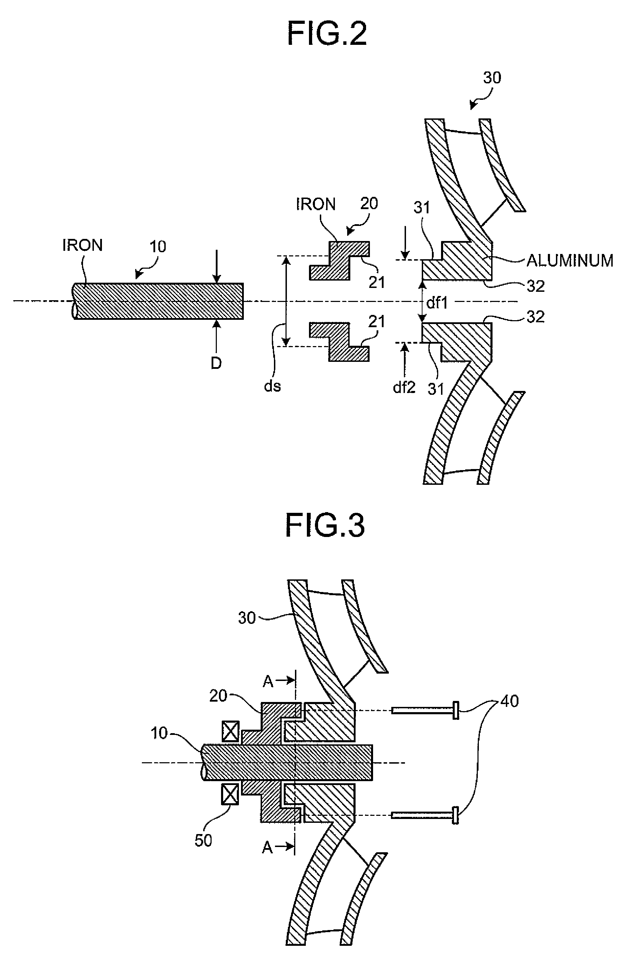

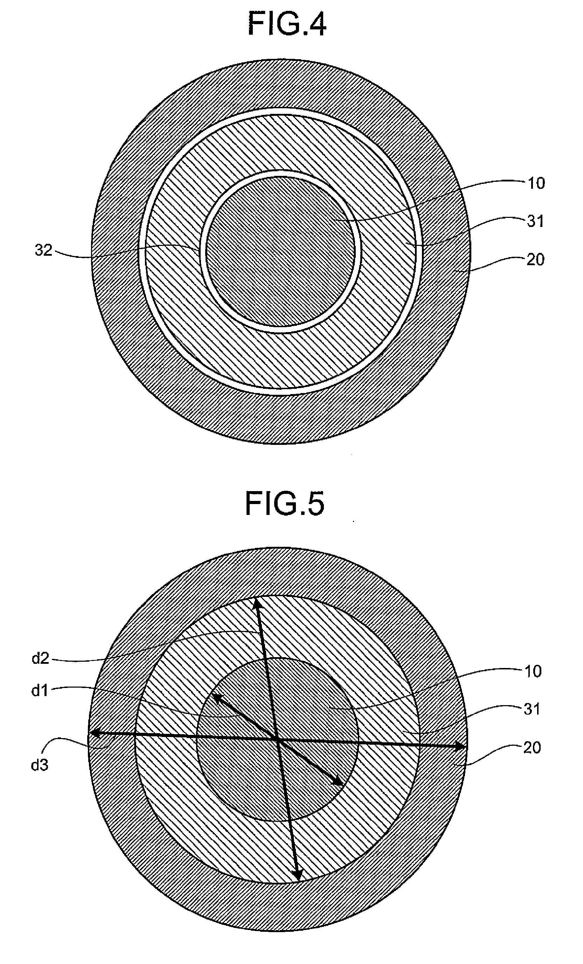

FIG. 1 is a vertical cross-sectional view of a motor 100 with a central focus on a fan 30; FIG. 2 is a vertical cross-sectional view explaining a configuration of the fan 30 according to a first embodiment; FIG. 3 is a diagram illustrating a condition in which the fan 30 illustrated in FIG. 2 is fixed to a rotor shaft; FIG. 4 is a cross-sectional view taken along line A-A illustrated in FIG. 3; and FIG. 5 is a diagram explaining a relationship between the linear expansion coefficients and the brake torque.

It is illustrated in FIG. 1 that, in the motor 100, the fan 30 is fixed to a rotor shaft 10 with bolts (fastening members) 40, and a stopper 20 serving as a positioning member for the fan 30 in the axial direction is disposed in between the fan 30 and a bearing 50.

Given below with reference to FIGS. 2 to 5 is the explanation related to a configuration of the fan 30 illustrated in FIG. 1. The fan 30 has a boss section (a protruding section) 31 that fits, along the axial direction, in a recessed portion 21 of the stopper 20 for the bearing 50. Besides, upon fitting in the stopper 20, the fan 30 fits together with the rotor shaft 10. Meanwhile, the rotor shaft 10 and the stopper 20 are made from, for example, iron; while the fan 30 is made from, for example, aluminum. Moreover, regarding the linear expansion coefficient of each member and regarding the transmission of rotary torque, the explanation is given later.

Given below are the dimensions of a contact portion in each member. Herein, the diameter in the lateral direction of the rotor shaft 10 (hereinafter, referred to as "rotor shaft diameter D"); the diameter of the recessed portion 21 of the stopper 20 (hereinafter, referred to as "fan-abutting-face diameter ds"); the diameter of that portion of the fan 30 which makes contact with the rotor shaft 10 (hereinafter, referred to as "rotor-shaft-abutting-face diameter dfl"); and the diameter of the boss section 31 that fits in the recessed portion 21 of the stopper 20 (hereinafter, referred to as "stopper-abutting-face diameter df2) are illustrated.

The bolts 40 illustrated in FIG. 4 are threaded into the stopper 20 through bolt insert holes that are formed on the fan 30. With the bolts 40, the fan 30 and the stopper 20 are fixed. Meanwhile, the stopper 20 is fit to the rotor shaft 10 by means of shrink fitting.

In the A-A cross-sectional view illustrated in FIG. 4, the rotor shaft 10, the boss section 31, and the stopper 20 are conceptually illustrated to be in a fitted condition at normal temperature. A small gap is illustrated in between the fitted portions of the members. Herein, the boss section 31 is disposed on the outside of the rotor shaft 10 and on the inside of the stopper 20. That is, the boss section 31 is sandwiched between the rotor shaft 10 and the stopper 20.

In between the inner periphery of the boss section 31 and the outer periphery of the rotor shaft 10, a gap is illustrated that is present at normal temperature. In an identical manner, in between the outer periphery of the boss section 31 and the inner periphery of the stopper 20, a gap is illustrated that is present at normal temperature. The motor 100 according to the first embodiment is configured in such a manner that, due to the difference in the linear expansion coefficients of the members at a low temperature or at a high temperature, the contact pressure at the fitted portions is increased so as to vary the brake torque between the members.

That point is explained below in details. With reference to FIG. 2, for example, when the ambient temperature around the fan 30 decreases, then the rotor-shaft-abutting-face diameter df1 becomes smaller than the rotor shaft diameter D because the contraction amount of the fan 30 (made from, for example, aluminum) is greater than that of the rotor shaft 10 (made from, for example, iron). Thus, it results in an increase in the contact pressure between a rotor shaft abutting face 32 and the rotor shaft 10.

With the rise in the ambient temperature around the fan 30, the stopper-abutting-face diameter df2 becomes greater than the fan-abutting-face diameter ds because the contraction amount of the fan 30 (made from, for example, aluminum) is greater than that of the stopper 20 (made from, for example, iron). Thus, it results in an increase in the contact pressure between the boss section 31 and the stopper 20.

Explained below with reference to FIG. 5 is the relationship between the linear expansion coefficients and the brake torque using calculating formulae. Firstly, it is defined that the portion over which the rotor shaft 10 and the boss section 31 make contact has a diameter d1, the portion over which the boss section 31 and the stopper 20 make contact has a diameter d2, and the stopper has a diameter d3. In this case, a linear expansion coefficient $\alpha Al$ of aluminum and a linear expansion coefficient $\alpha Fe$ of iron can be expressed as given in Expression (1).

$$\text{linear expansion coefficien ts}: \alpha Al > \alpha Fe \qquad (1)$$

A temperature change $\Delta T$ can be expressed as given in Expression (2).

$$\text{temperature change}: \Delta T = T - Tr \left( \text{where, Tr}: \text{normal temperature} \right) \qquad (2)$$

A difference $\delta$ between the linear expansion coefficient $\alpha Al$ of aluminum and the linear expansion coefficient $\alpha Fe$ of iron can be expressed as given in Expressions (3) and (4).

$$\delta d_1 = \left( \alpha Al - \alpha Fe \right) d_1 \Delta T \qquad (3)$$

$$\delta d_2 = \left( \alpha Fe - \alpha Al \right) d_2 \Delta T \qquad (4)$$

When the temperature change $\Delta T > 0$, the difference $\delta$ between the linear expansion coefficient $\alpha Al$ of aluminum and the linear expansion coefficient $\alpha Fe$ of iron can be expressed as given in Expressions (5) and (6).

$$\text{when } \Delta T > 0, \ \delta d_1 > 0, \delta d_2 < 0 \qquad (5)$$

$$\text{when } \Delta T < 0, \ \delta d_1 < 0, \delta d_2 > 0 \qquad (6)$$

Thus, at a high temperature, aluminum and iron abut against each other (being in a shrink-fit condition) at the diameter d2 of the portion over which the boss section 31 and the stopper 20 make contact. Moreover, at a low temperature (for example, when the motor 100 is started at a place in a cold weather region), aluminum and iron abut against each other (being in a expansion-fit condition) at the diameter d1 of the portion over which the rotor shaft 10 and the boss section 31 make contact.

A contact pressure PQ of aluminum and iron can be expressed as given in Expressions (7) and (8).

when $\Delta T > 0$,

$$P_Q = \frac{\delta d_2}{2}\left\{\frac{1}{EAl}\cdot\frac{d_2}{2}\left(\frac{d_1^2+d_2^2}{d_2^2-d_1^2}-\nu Al\right)+\frac{1}{EFe}\cdot\frac{d_2}{2}\left(\frac{d_2^2+d_3^2}{d_3^2-d_2^2}-\nu Fe\right)\right\}$$

where, $EAl$: Young's modulus of Al, $EFe$: Young's modulus of Fe, $\nu$: Poission ratio

(7)

when $\Delta T < 0$,

$$P_Q = \frac{\delta d_1}{2}\left\{\frac{1}{EFe}\cdot\frac{d_1}{2}(1-\nu Fe)+\frac{1}{EAl}\cdot\frac{d_1}{2}\left(\frac{d_1^2+d_2^2}{d_2^2-d_1^2}-\nu Al\right)\right\}$$

(8)

At the diameter d2 of the portion over which the boss section 31 and the stopper 20 make contact, a brake torque T can be expressed as given in FIG. 9. At the diameter d1 of the portion over which the rotor shaft 10 and the boss section 31 make contact, the brake torque T can be expressed as given in Expressions (9) and (10).
when $\Delta T > 0$,

$$T = \mu P_Q A_1 \cdot \frac{d_2}{2}$$

(9)

where, $\mu$ : friction coefficient
$A_1$: lateral area of outer diameter $d_1$

when $\Delta T < 0$,

$$T = \mu P_Q A_1 \cdot \frac{d_1}{2}$$

(10)

where, $A_2$ : lateral area of outer diameter $d_2$
In this way, the motor 100 according to the first embodiment is configured in such a way that, at a low temperature, the contact pressure PQ at the abutting portion between the rotor shaft abutting face 32 and the rotor shaft 10 increases thereby leading to the generation of the brake torque T between the rotor shaft 10 and the fan 30. Moreover, the configuration is such that, at a high temperature, the contact pressure PQ at the abutting portion between the boss section 31 and the stopper 20 increases thereby leading to the generation of the brake torque T between the stopper 20 and the boss section 31.
In contrast, in a conventional motor, for example, the fan is directly fixed to the rotor shaft by using the fastening force of bolts. In that case, as also described above in the technical problem section, the torque of the rotor shaft acts directly on the bolts. That may lead to the loosening of the bolts. Moreover, in another type of configuration, the fan is fixed by inserting bolts in the stopper that is fit to the rotor shaft by means of shrink fitting. In that case too, the torque of the rotor shaft acts directly on the bolts.
As described above, in the motor 100 according to the first embodiment, the fan 30 is made from a material having a greater linear expansion coefficient than the linear expansion coefficients of the rotor shaft 10 and the stopper 20. Moreover, the boss section 31 of the fan 30 is sandwiched between the rotor shaft 10 and the stopper 20. Hence, for example, at the temperature observed while running, in addition to the fastening force of the bolts 40, it is also possible to apply the brake torque T in the rotating direction irrespective of whether the temperature is high or low. Consequently, for example, at the temperature when the maintenance of the fan 30 is done (i.e., at a normal temperature Tr), the fan 30 can be detached without difficulty. Moreover, if the bolts 40 become loose at a low temperature, the fan can still be prevented from skidding that may occur due to torque variation. Furthermore, since the load on the bolts 40 decreases, it becomes possible to reduce the number of the bolts 40 or to downsize the bolts 40. Besides, since it is sufficient only to process the fitted portion between the stopper 20 and the boss section 31, the configuration of the abutting portion of the fan 30 can be simplified. As a result, the fan 30 can become lighter in weight, can be installed in a smaller space, and can be manufactured at low cost.

Second embodiment

In the motor 100 for a vehicle according to a second embodiment, the stopper 20 and the boss section 31 have a different shape. Explained below is a configuration of the fan according to the second embodiment. Meanwhile, the elements identical to those explained in the first embodiment are referred to by the same reference numerals and their explanation is not repeated. Only the difference in the configuration is explained below.

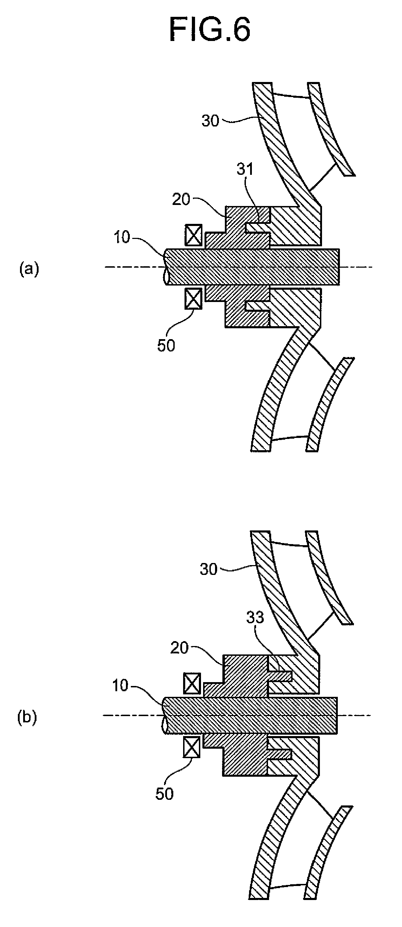

FIG. 6 is a vertical cross-sectional view for explaining a configuration of the fan 30 according to the second embodiment. As illustrated in FIG. 6(a), the boss section 31 fits in a groove portion of the stopper 20. With the boss section 31, the stopper 20, and the rotor shaft 10 configured in such a manner; at a high temperature, the outer periphery of the boss section 31 makes contact with the stopper 20. Moreover, at a low temperature, the fan 30 makes contact with the rotor shaft 10 and the inner periphery of the boss section 31 makes contact with the stopper 20.

As illustrated in FIG. 6(b), a stopper boss section 33 has a shape that fits in a groove portion of the fan 30. Thus, with the boss section 31, the stopper 20, and the rotor shaft 10 configured in such a manner; at a low temperature, the fan 30 makes contact with the rotor shaft 10 and the outer periphery of the stopper boss section 33 makes contact with the fan 30. Moreover, at a high temperature, the inner periphery of the stopper boss section 33 makes contact with the fan 30.

As described above, in the motor 100 according to the second embodiment, the thickness of the fitted portion between the stopper 20 and the fan 30 is reduced as compared to the first embodiment. That makes it possible to reduce the difference between the brake torque T at the high temperature and the brake torque T at the low temperature.

Meanwhile, in the explanation according to the first and second embodiments, it is assumed that the rotor shaft 10 and the stopper 20 are made from iron and the fan 30 is made from aluminum. However, that does not have to be the only case. Herein, it is sufficient that the linear expansion coefficient $\alpha$ is set to be greater than the linear expansion coefficients $\alpha$ of the rotor shaft 10 and the stopper 20.

Moreover, the linear expansion coefficient $\alpha$ of the rotor shaft 10 and the linear expansion coefficient $\alpha$ of the stopper 20 can also be set to have different values. For example as illustrated in FIG. 1, the contact surface area between the recessed portion 21 and the boss section 31 is smaller than the contact surface area between the rotor shaft abutting face 32 and the rotor shaft 10. However, if the linear expansion coefficient $\alpha$ of the stopper 20 is set to a value smaller than the linear expansion coefficient $\alpha$ of the rotor shaft 10, the brake torque T at a high temperature can be secured. Meanwhile, the materials of the members need not be limited to aluminum and iron, and any other material can be used as long as the abovementioned relationship between the linear expansion coefficients $\alpha$ is established.

In the first and second embodiments, the explanation is given with reference to an outer fan of a totally-enclosed-fan-cooled motor as an example. However, the explanation is not limited to the totally-enclosed-fan-cooled motor or to the outer fan, and is also applicable to a motor other than a totally-enclosed-fan-cooled motor or to a fan other than an outer fan.

Moreover, in the first and second embodiments, the bolts 40 are used as the fastening members for the fan 30. Alternatively, the fastening members are not limited to the bolts 40 as long as those fastening members can be threaded in the stopper 20 for fixing the fan 30.

Industrial Applicability

In this way, the present invention is applicable to a motor for a vehicle that drives a railroad vehicle, and is particularly suitable as an invention in which, at a normal temperature, the fan can be easily taken out and, at a high temperature or at a low temperature, the fan can be prevented from skidding that may occur due to the torque variation of the rotor shaft.

Reference Signs List

10    ROTOR SHAFT

| | |
|---|---|
| 20 | STOPPER |
| 21 | RECESSED PORTION |
| 30 | FAN |
| 31 | BOSS SECTION |
| 32 | ROTOR SHAFT ABUTTING FACE |
| 33 | STOPPER BOSS SECTION |
| 40 | BOLT |
| 50 | BEARING |
| 100 | MOTOR |
| $\alpha$ | LINEAR EXPANSION COEFFICIENT |
| D | ROTOR SHAFT DIAMETER |
| df1 | ROTOR-SHAFT-ABUTTING-FACE DIAMETER |
| df2 | STOPPER-ABUTTING-FACE DIAMETER |
| ds | FAN-ABUTTING-FACE DIAMETER |
| d1 | DIAMETER OF PORTION OVER WHICH ROTOR SHAFT AND BOSS SECTION MAKE CONTACT |
| d2 | DIAMETER OF PORTION OVER WHICH BOSS SECTION AND STOPPER MAKE CONTACT |
| d3 | STOPPER DIAMETER |
| T | BRAKE TORQUE |
| Tr | NORMAL TEMPERATURE |
| $\Delta T$ | TEMPERATURE CHANGE |

**Claims**

1. A motor for a vehicle installed in a railway train and having a fan that is mounted on a rotor shaft and that causes the outside air into the motor, the motor for a vehicle comprising:

    a stopper which functions as a positioning member for the fan in an axial direction, which is fixed in between a bearing supporting the rotor shaft and the fan inserted from one end of the rotor shaft, and which has a surface formed opposite to the fan so as to be fittable with the fan, wherein
    the fan is fixed by a fastening member, which is inserted toward the stopper in substantially parallel to the rotor shaft, and has a linear expansion coefficient set to be greater than linear expansion coefficients of the rotor shaft and the stopper.

2. The motor for a vehicle according to claim 1, wherein
    the stopper is formed such that a surface opposite to the fan is recessed, and
    the fan has a surface that lies opposite to the stopper and is formed in a projected shape to be fittable with the stopper.

3. The motor for a vehicle according to claim 1, wherein
    the stopper is formed such that a surface opposite to the fan is projected, and
    the fan has a surface that lies opposite to the stopper and is formed in a recessed shape to be fittable with the stopper.

4. The motor for a vehicle according to claim 1, wherein the linear expansion coefficient of the stopper is set to be smaller than the linear expansion coefficient of the rotor shaft.

# FIG.1

100

40

30  20  10  50

# FIG.2

IRON   10

IRON   20

31

ALUMINUM

32

32

31

D

ds

df1

df2

30

# FIG.3

30

A

20

10

50

A

40

# FIG.4

# FIG.5

# FIG.6

(a)

(b)

## INTERNATIONAL SEARCH REPORT

| | International application No. |
|---|---|
| | PCT/JP2009/062423 |

A. CLASSIFICATION OF SUBJECT MATTER
*H02K5/04*(2006.01)i, *H02K5/00*(2006.01)i

According to International Patent Classification (IPC) or to both national classification and IPC

B. FIELDS SEARCHED

Minimum documentation searched (classification system followed by classification symbols)
H02K5/04, H02K5/00

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 8-186969 A (NIDEC Corp.), 16 July, 1996 (16.07.96), Par. Nos. [0007] to [0013]; Fig. 1 (Family: none) | 1-4 |
| Y | JP 2009-44830 A (Denso Corp.), 26 February, 2009 (26.02.09), Par. No. [0025] & US 2009/0039719 A | 1-4 |
| Y | JP 2003-83324 A (NSK Ltd.), 19 March, 2003 (19.03.03), Par. No. [0026] (Family: none) | 1-4 |

[X] Further documents are listed in the continuation of Box C.   [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 August, 2009 (12.08.09) | 25 August, 2009 (25.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

12

EP 2 453 554 A1

**INTERNATIONAL SEARCH REPORT**

International application No.

PCT/JP2009/062423

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-136904 A (Seiko Instruments Inc.), 21 May, 1999 (21.05.99), Par. No. [0012] (Family: none) | 1-4 |

Form PCT/ISA/210 (continuation of second sheet) (April 2007)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H05300698 B